## Europäisches Patentamt
## European Patent Office
## Office européen des brevets

(11) Numéro de publication: **0 053 992**
**A1**

(12) **DEMANDE DE BREVET EUROPEEN**

(21) Numéro de dépôt: **81420170.3**

(22) Date de dépôt: **23.11.81**

(51) Int. Cl.³: **G 01 N 21/57**
**G 01 B 11/30**

(30) Priorité: **24.11.80 FR 8025386**

(43) Date de publication de la demande:
**16.06.82 Bulletin 82/24**

(84) Etats contractants désignés:
**DE GB IT**

(71) Demandeur: **CEGEDUR SOCIETE DE TRANSFORMATION DE L'ALUMINIUM PECHINEY 66, Avenue Marceau F-75361 Paris Cédex 08(FR)**

(72) Inventeur: **Sabater, Jacques 6, Résidence des Fonds Sanettes F-91190 Gif/S/Yvette(FR)**

(72) Inventeur: **Badia, Michel D'Artagnan 1 Val de la Torse F-13100 Aix-en-Provence(FR)**

(72) Inventeur: **Laslaz, Gérard Lotissement "Le Champ Roux" F-38380 Saint Laurent du Pont(FR)**

(74) Mandataire: **Pascaud, Claude et al, PECHINEY UGINE KUHLMANN 28, rue de Bonnel F-69433 Lyon Cedex 3(FR)**

(54) **Procédé et dispositif de contrôle optique des états de surface de produits métallurgiques.**

(57) L'invention concerne un procédé et un dispositif de contrôle optique précis et représentatif de l'observation visuelle de l'état de surface de produits métallurgiques.

Le procédé consiste à utiliser un faisceau formant sur la surface à examiner une tache de dimensions inférieures au millimètre, à balayer de façon continue et linéaire une zone de la surface avec ce faisceau et à en mesurer sur cette zone la réflectance spéculaire à l'intérieur d'un angle solide d'ouverture angulaire inférieure à 1° et des composantes de la réflectance diffuse. Le dispositif comporte, principalement, dans le sens du cheminement de la lumière, une source laser (1), une cellule de référence (5), un miroir tournant (7), une lentille convergente (8), une cellule de mesure de réflectance spéculaire (10) et une cellule de mesure de réflectance diffuse (11) et la surface à contrôler (9) est placée en aval de la lentille (8).

L'invention s'applique au contrôle de toute surface de produits métallurgiques et notamment de produits à base d'aluminium destinés à la décoration ou à l'obtention de réflecteurs et, dans tous les cas où la plus ou moins grande homogénéité des propriétés optiques de réflexion constitue un critère de qualité du produit.

./...

EP 0 053 992 A1

FIG.1

1

## PROCEDE ET DISPOSITIF DE CONTROLE OPTIQUE DES ETATS
## DE SURFACE DE PRODUITS METALLURGIQUES

La présente invention concerne un procédé et un dispositif de contrôle optique précis et représentatif de l'observation visuelle des états de surface de produits métallurgiques pour lesquels les propriétés de réflectance et la plus ou moins grande homogénéité de ces propriétés constituent un critère de qualité du produit.

Cette invention trouve son application, notamment, dans le contrôle de produits à base d'aluminium destinés, en particulier, à la décoration et à l'obtention de réflecteurs.

Les propriétés optiques de réflexion de la surface de produits métallurgiques, c'est-à-dire l'aptitude à réemettre la lumière reçue, s'évaluent, en général, au moyen d'appareils qui détectent soit la réflectance spéculaire correspondant à la quantité de lumière réfléchie suivant la loi de Descartes, soit la réflectance diffuse correspondant à la quantité de lumière réémise en dehors de la direction spéculaire. Par ailleurs, l'aptitude de la surface à donner une image fidèle d'un objet peut être contrôlée par des appareils de mesure de netteté.

Pour ces détections, on utilise couramment des appareils à lampe thermique tels que le réflectodiffusomètre LELONG-DRAPIER avec têtes de LANGE ou tête de EEL, répondant aux normes ISO/DIS 2767 et BS 1615, au moyen desquels on illumine la surface à examiner sur une aire supérieure au centimètre carré, et on détermine la réflectance par mesure de la fraction de la lumière réfléchie spéculairement et diffusée dans un angle solide d'une ouverture de 1 à 3° environ et centrée autour de la direction de réflexion spéculaire. Les mêmes types d'appareils équipés d'autres têtes de mesure peuvent être employés pour mesurer la diffusance dans des directions éloignées de la direction spéculaire. Il existe aussi des appareils qui mesurent la réflectance totale au moyen de sphères intégratrices. Quant à la netteté, sa mesure fait appel à différents types de réflectoscope.

Ces appareils de contrôle optique classiques présentent des inconvénients. Ils sont à la fois insuffisants, imprécis et peu fiables.

Ils sont insuffisants car ils ne fournissent que des résultats de mesures globales portant sur des surfaces de l'ordre du centimètre carré ou plus.

Bien qu'ils quantifient globalement l'aspect plus ou moins mat ou plus ou moins brillant de la surface examinée, ils ne permettent pas un contrôle précis d'échantillons dans lesquels l'homogénéité ou l'hétérogénéité des propriétés réfléchissantes ou diffusantes de la surface constituent un critère de qualité. C'est le cas, en particulier, d'un certain nombre de produits utilisés en décoration et, notamment, de produits brillants pour lesquels on recherche, à l'observation visuelle, une bonne homogénéité des propriétés optiques de surface, c'est-à-dire l'absence de défauts locaux d'origine physique (planéité) et chimique (produits étrangers) ou, au contraire, une hétérogénéité telle qu'elle permette de faire apparaître, par contraste, un motif qu'on a déposé ou imprimé sur la surface.

Ces appareils de l'art antérieur sont imprécis et peu fiables car ils nécessitent, par conception, un étalonnage mettant en oeuvre des échantillons témoins, dont la durée de vie peut être très brève en raison de leur évolution dans le temps.

C'est pour parer à ces inconvénients que la demanderesse a cherché et mis au point un procédé et un dispositif de contrôle optique des états de surface de produits métallurgiques permettant de mesurer simultanément et de façon plus précise la réflectance à la fois spéculaire et diffuse de ces surfaces et de restituer de façon chiffrée la distribution et le contraste des propriétés optiques telles que peut l'observer l'oeil à faible ou moyenne distance.

Suivant l'invention, le procédé de contrôle optique précis et représentatif de l'observation visuelle des états de surface de produits métallurgiques se font de façon connue par mesure de la réflectance spéculaire ou diffuse d'un faisceau lumineux sur ladite surface, mais il est caractérisé en ce que le faisceau forme sur la surface à examiner une tache ayant une aire inférieure au millimètre carré et la mesure de réflectance spéculaire à partir de cette tache est effectuée à l'intérieur d'un angle solide d'ouverture angulaire inférieure à 1 degré.

En utilisant une tache lumineuse de dimensions voisines du pouvoir séparateur de l'oeil et en mesurant la réflectance spéculaire à l'intérieur d'un angle de faible ouverture, on reconstitue l'impression visuelle de brillance en chaque région de la surface à examiner.

De plus, le procédé consiste à balayer linéairement en continu la surface de façon à illuminer progressivement toute une zone de largeur égale à celle de la tache et de longueur égale à celle de l'amplitude du balayage. Ce balayage est réalisé soit par un déplacement du faisceau par rapport à la surface, soit, au contraire, par un mouvement de la surface devant un faisceau fixe.

En mesurant la réflectance sur toute la zone balayée, on a connaissance des variations de cette réflectance et, par suite, de l'homogénéité ou de l'hétérogénéité de l'aspect visuel de la surface. Entre autres possibilités d'analyse statistique de cette hétérogénéité, le procédé comprend également la mesure de l'écart type des variations de réflectance qui constitue un critère de choix de la qualité de la surface.

L'invention concerne également un dispositif permettant la mise en oeuvre du procédé revendiqué.

Ce dispositif est caractérisé en ce qu'il comporte une combinaison de moyens optiques permettant d'obtenir par une faible divergence du faisceau lumineux une excellente résolution angulaire, et d'effectuer des mesures sous des angles d'ouverture petits de la réflectance spéculaire en une région de la surface et de sa variation sur une zone donnée de cette même surface.

Ceci est réalisé en mettant en oeuvre une source de lumière faiblement divergente c'est-à-dire dont le faisceau émis est fin et constitué de rayons parallèles.

On peut utiliser, de préférence, une source laser classique car la divergence du faisceau émise généralement par une telle source est inférieure au milliradian et permet d'effectuer les mesures sous un angle d'ouverture très inférieur au degré. On obtient ainsi des résultats plus précis et qui traduisent mieux l'impression visuelle ressentie par un observateur.

Pour éviter une instabilité des mesures dûe à la polarisation résiduelle des lasers dits non polarisés, il est avantageux d'avoir recours à un laser polarisé rectilignement et de placer le plan de polarisation à 45° par rapport au plan de la surface à contrôler.

On peut incorporer à la sortie du laser un système afocal constitué par deux lentilles afin de dilater le faisceau à la dimension voulue, c'est-à-dire de 0,1 mm de diamètre par exemple jusqu'à 1 mm, ce système réduisant encore du même coup la divergence résiduelle du faisceau.

Ce faisceau émis par la source laser, éventuellement dilaté par le système afocal, traverse d'abord une lame de verre inclinée par rapport à l'axe du faisceau de façon qu'une partie de son flux soit déviée vers une cellule de mesure dont le but est de contrôler en permanence la puissance du faisceau.

En aval de la lame de verre, on peut placer un diaphragme pour éliminer la lumière diffusée par cette dernière ainsi que les impuretés éventuelles du laser, ce qui contribue à augmenter encore la précision des mesures.

Le dispositif selon l'invention est caractérisé également en ce que les mesures de réflectance spéculaire et diffuse peuvent être effectuées en une région de la surface et également sur une zone donnée de la surface, ce qui permet de connaître des variations des propriétés optiques. Ceci peut être réalisé en disposant en aval du diaphragme un miroir oscillant monté, par exemple, sur un axe de galvanomètre alimenté par un courant de 50 Hz. Ce miroir a pour but de faire décrire à l'axe du faisceau lumineux un segment de droite horizontal de façon à balayer une zone donnée de la surface contrôlée. La longueur balayée par le miroir sur la surface dépend de l'angle de rotation du miroir, de la distance entre miroir et surface et des caractéristiques de la lentille placée devant la surface. Ces facteurs sont adaptés en fonction de la surface à contrôler.

Par principe, le spectre de fréquences spatiales des variations sur l'échantillon des propriétés optiques résolu par le système de balayage est limité vers les grandes fréquences spatiales par le diamètre du faisceau incident ; en effet, la mesure instantanée moyenne, c'est-à-dire filtre, les variations sur des distances faibles par rapport à la taille du faisceau. Par un bon choix du diamètre d du faisceau sur l'échantillon, le système permet de sélectionner les variations correspondant à un spectre de fréquences spatiales sur l'échantillon inférieur à une fréquence de coupure fc = 1/d (on peut également déterminer cette fréquence de coupure par un filtrage passe bas).

Entre autres particularités du dispositif selon l'invention, cette fréquence fc peut être ajustée pour les applications considérées, en particulier à la fréquence spatiale limite 1/d' de résolution sur l'échantillon de l'observation visuelle, d' étant le pouvoir séparateur de l'oeil. Ceci permet de faire correspondre les mesures effectuées aux seules variations optiques perçues visuellement.

A titre d'exemple, pour relier les mesures des variations effectuées avec l'appareil et les observations visuelles subjectives d'un observateur placé à 30-40 cm de l'échantillon ( d' ≃ 0,1 mm), il convient d'adopter une taille de faisceau d ≃ 0,1 mm  ou un faisceau plus petit et un filtrage électronique éliminant et moyennant les variations sur des distances inférieures ou égales à 0,1 mm.

Pour des applications autres que celles où l'aspect visuel est déterminant, la fréquence fc de coupure peut être, suivant les mêmes principes, ajustée en fonction du problème particulier posé.
On pourrait aussi réaliser un déplacement du produit à contrôler pour pouvoir effectuer la mesure de réflectance sur une zone donnée de ce dernier.

Le faisceau issu du miroir oscillant passe ensuite à travers une lentille convergente qui le focalise en un point P', mais de façon virtuelle, car la surface à contrôler est placée en-deçà de ce point et réemet le faisceau de façon spéculaire vers un autre point de focalisation P symétrique de P' par rapport au plan de la surface. L'incidence du faisceau sur la surface à contrôler peut être quelconque. Toutefois, pour des raisons d'encombrement, on préfère utiliser un angle voisin de 20°. En ce point P est placée la cellule de mesure de réflectance spéculaire.

Outre cette cellule de mesure de réflectance spéculaire, il est intéressant de disposer une seconde (ou plusieurs autres) cellule(s) pour mesurer une (ou plusieurs) composantes de la réflexion diffuse. L'angle de positionnement de cette (ou ces) cellule(s) et l'angle d'ouverture de la (ou des) mesure(s) peut alors être choisi en fonction du produit et de l'application recherchée.
Ces cellules de mesure sont classiques, du type photovoltaïque et choisies en fonction des caractéristiques du laser.

Dans un montage où la distance entre échantillon et cellule a été fixée à 30 cm environ, l'angle solide sélectionné pour la mesure de réflectance peut être choisi en plaçant devant la cellule un diaphragme circulaire ou carré de différentes tailles. La conception du système, grâce en particulier à la faible divergence du faisceau et à sa taille relativement réduite (0,2 mm environ) permet aisément, tout en ayant fixé une distance entre cellule de mesure et échantillon (30 cm environ) non prohibitive, de sélectionner des angles d'ouverture de mesure compris entre 1 degré et quelques minutes en interposant devant la cellule des diaphragmes de 10 à 1 mm ( à une taille du faisceau spéculaire sur l'échantillon de l'ordre de 0,2 mm, correspond un angle d'ouverture de 2 minutes environ).

A partir des données recueillies par ces cellules, tout un ensemble électronique permet de connaître rapidement par lecture ou comptage direct les mesures suivantes :

.. Mesure de la réflectance spéculaire instantanée,

. Mesures de la diffusance instantanée,

. Mesures de variation de réflectance spéculaire et diffuse au cours du balayage ( écart type ),

. Calcul des réflectances moyennes sur la région balayée,

. Autres paramètres caractéristiques des variations de réflectance et diffusance au cours du balayage, par exemple calcul de l'écart type par module de calcul standard RMS, analyse spectrale des distances de variations sur l'échantillon : distance moyenne, etc...

Cet ensemble peut comprendre de façon classique :

- Des amplificateurs opérationnels des réponses électriques des cellules utilisés en convertisseurs courant-tension. Le gain de ces amplificateurs peut être réglé lors de l'étalonnage de l'appareil au moyen de résistances variables.

- Des diviseurs pour le calcul des mesures en pourcentage de la lumière incidente. Celle-ci peut être déterminée par une opération de calibrage effectuée par exemple en envoyant le faisceau incident directement sur la cellule, ceci pouvant être réalisé en intercalant un prisme à réflexion totale entre la lentille et la surface à contrôler.

Ces diviseurs permettent, par ailleurs, de corriger les fluctuations d'intensité du laser, fluctuations détectées par le système de référence.

- Un équipement de lecture digital ou d'enregistrement de données ainsi que tout module de calcul standard destiné à l'étude de variation de réflectance et de diffusance : calcul de moyenne, écart type, modules de calcul RMS ....

Le dispositif selon l'invention peut donner, avec un bon choix des composants électriques, une grande précision (dispersion ⩽ 1 %).

Grâce à la correction en continu des variations du laser par la cellule de référence et à l'étalonnage direct par mesure de l'intensité du faisceau incident, ce dispositif est par conception d'une excellente fiabilité et n'exige pas pour le calibrage l'emploi d'échantillons étalons.

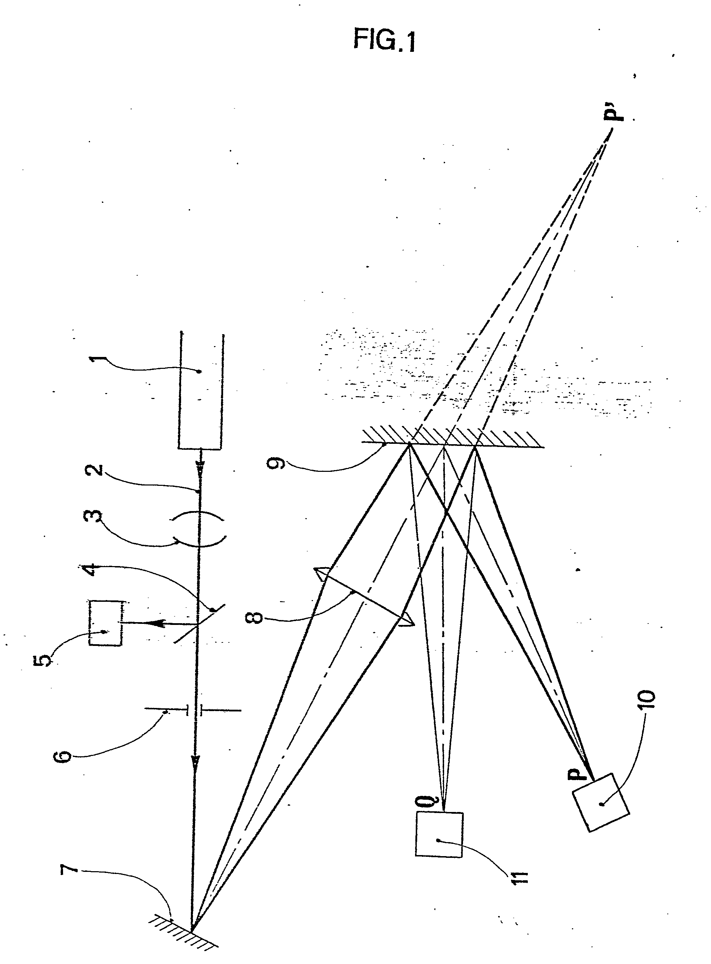

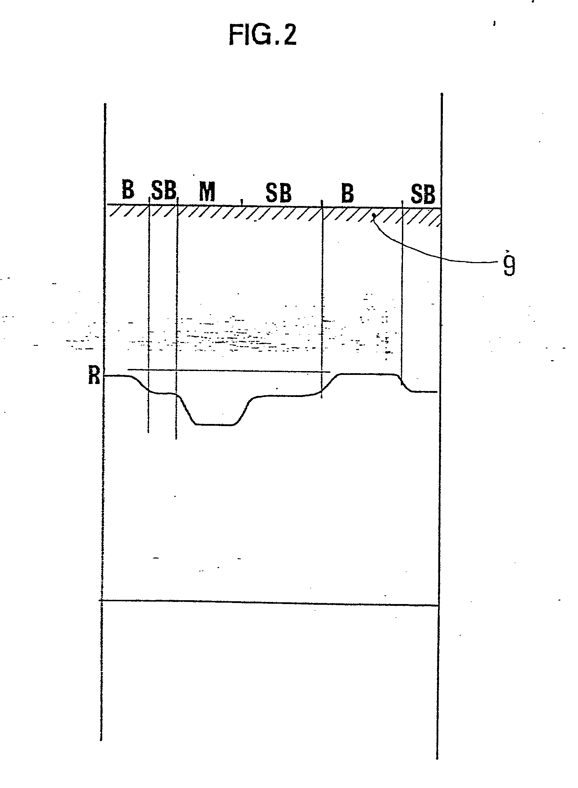

L'invention sera mieux comprise à l'aide des figures jointes où la figure 1 représente, vu de dessus, un schéma du dispositif de mesure et la figure 2, un graphique de la réflectance obtenue avec le dispositif à partir d'une surface métallique.

La figure 1 représente le dispositif suivant l'invention. Il comprend une source de lumière faiblement divergente (1), qui émet un faisceau lumineux (2) traversant d'abord un système afocal (3) de grossissement, puis une lame de verre (4) inclinée à 45° par rapport à la trajectoire du faisceau ; 10 % environ du flux lumineux est dévié vers la cellule de référence (5) tandis que la majeure partie s'écoulant à travers le diaphragme (6) est réfléchie par le miroir tournant (7) vers une lentille convergente (8) qui donne en (P') une image du miroir tournant. La surface à contrôler (9) placée en-deçà de (P') intercepte le faisceau sous un angle voisin de 20° et le réémet de façon spéculaire en un point (P) symétrique de (P') par rapport au plan de la surface à contrôler où se trouve placée une cellule de mesure de réflectance spéculaire (10). Une partie du faisceau réémis de façon diffuse par la surface est captée par une cellule de mesure de la réflectance diffuse (11) centrée sur le point (Q).

Dans un exemple de réalisation de ce dispositif, la distance entre le système afocal (3) et la surface (9) est de 860 mm ; la distance entre la surface (9) et la cellule (11) : 290 mm ; l'angle d'incidence : 22° ; l'angle de diffusance : 9°30 ; la distance entre les deux cellules de mesure : 50 mm ; le diamètre de la tache sur la surface : 0,15 mm ; la longueur du segment de droite décrit par le faisceau : 4 à 20 mm, soit une aire balayée de 0, 6 à 3 mm2 ; les angles d'ouverture de mesure sont pour la réflectance spéculaire de 0,73 à 0,073 degré décimal, pour la réflectance diffuse de quelques dizaines de degrés à 0,073 degré décimal.

La figure 2 montre un graphique de la réflectance spéculaire obtenue
à partir d'une surface (9) présentant visuellement des plages de
luminance variable allant du brillant, symbolisé par B, au semi-
brillant SB, au mat M. La courbe placée en bas de la planche montre
les valeurs de réflectance R obtenues graphiquement. On peut remarquer la concordance très bonne entre l'observation visuelle et
la mesure obtenue à partir du dispositif selon l'invention.

Des mesures comparatives ont été faites avec l'appareil classique
de LELONG-DRAPIER et le dispositif de l'invention mettant en oeuvre
un certain nombre d'échantillons de produits à base d'aluminium qui
ont été traités suivant différents procédésou gammes de laminage
de façon à obtenir des surfaces de réflectance spéculaire différente.

Les échantillons ont été classés numériquement par ordre décroissant
de luminance telle qu'elle apparaît à l'observation visuelle et
des mesures de pourcentages de réflectance spéculaire moyenne ont
été faites parallèlement avec l'appareil de notre invention et
l'appareil de l'art antérieur LELONG-DRAPIER. En voici les
résultats :

| N° repère de l'échantillon | % R suivant l'invention | % R suivant l'art antérieur |
|---|---|---|
| Luminance décroissante (1 | 76,5 | 80-78 |
| (2 | 76 | 80-78 |
| (3 | 68 | 80-78 |
| (4 | 30,1 | 60-62 |
| (5 | 20,1 | 55-57 |
| (6 | 0,83 | 30-32 |

La précision des mesures est de l'ordre de 0,1 % pour l'appareil
de notre invention et de 1 à 2 % pour l'appareil classique.

Ces résultats montrent qu'il est possible de mieux discerner avec
notre appareil des variations de brillance pour lesquelles l'appareil de l'art antérieur est insensible du fait qu'il englobe dans sa mesure de réflectance spéculaire une fraction importante de réflectance diffuse.

Une autre série d'échantillons numérotés de 7 à 12 ont été soumis successivement à l'appréciation visuelle et classés sur une référence allant de A à E et désignant par A un échantillon ayant un aspect de surface homogène, par E un échantillon présentant des rayures et des stries visibles à l'oeil ainsi que les états intermédiaires entre A et E.

Avec l'appareil suivant l'invention, on a mesuré les écarts-types des fluctuations de réflectance en pourcentage.

| N° repère de l'échantillon | Appréciation visuelle | Ecart-type % |
|---|---|---|
| 7 | A | 2 |
| 8 | B | 10 |
| 9 | A | 3 |
| 10 | D | 30 |
| 11 | E | 40 |
| 12 | A | 0,5 |

On peut noter la bonne corrélation entre les mesures de fluctuation et l'observation visuelle du degré d'hétérogénéité optique des échantillons.

Ainsi, le dispositif suivant l'invention permet d'obtenir un contrôle optique précis et représentatif de l'observation visuelle des états de surface de produits métallurgiques.

Il trouve son application dans le contrôle de toute surface de produits métallurgiques et notamment de produits à base d'aluminium destinés en particulier à la décoration, à l'obtention de réflecteurs et, dans tous les cas où la plus ou moins grande homogénéité de propriété optique constitue un critère de qualité du produit.

11

REVENDICATIONS

1 - Procédé de contrôle optique précis et représentatif de l'observation visuelle des états de surface de produits métallurgiques par mesure de la réflectance spéculaire et/ou diffuse d'un faisceau lumineux sur ladite surface, dans lequel ce faisceau forme sur la surface à examiner une tache ayant une aire inférieure au millimètre carré et où la mesure de réflectance spéculaire à partir de cette tache est effectuée à l'intérieur d'un angle solide d'ouverture angulaire inférieure à un degré, caractérisé en ce que la surface est balayée linéairement en continu par le faisceau lumineux de façon à mesurer les variations de réflectance sur toute une zone de la surface.

2 - Procédé selon revendication 1, caractérisé en ce que le faisceau lumineux forme sur la surface une tache ayant des dimensions voisines du pouvoir séparateur de l'oeil.

3 - Procédé selon revendication 1, caractérisé en ce que l'on mesure l'écart-type des variations de réflectance.

4 - Dispositif pour la mise en oeuvre du procédé suivant la revendication 1, comprenant une source de lumière (1) qui émet un faisceau faiblement divergent (2), un système afocal de grossissement (3), une lame de verre (4) inclinée par rapport à la trajectoire du faisceau de façon à dévier une fraction du faisceau vers une cellule de référence (5), un diaphragme (6), un miroir (7), une lentille convergente (8), une cellule de mesure de réflectance spéculaire (10), la surface (9) dont on contrôle l'état qui réémet le faisceau qu'elle reçoit de la lentille vers un point P où se trouve la cellule, caractérisé en ce que le miroir (7) est tournant et placé suivant le sens de propagation du faisceau lumineux avant la surface à contrôler.

5 - Dispositif selon revendication 4, caractérisé en ce que la source de lumière est un tube laser.

0053992

FIG.1

## FIG.2

Office européen
des brevets

**RAPPORT DE RECHERCHE EUROPEENNE**

| Catégorie | Citation du document avec indication, en cas de besoin, des parties pertinentes | Revendication concernée |
|---|---|---|
| X | US - A - 4 139 307 (G. CLARKE)<br><br>* colonne 2, figures 1-3 *<br><br>--- | 1,3,5 |
| A | US - A - 3 245 306 (F. POTTER)<br><br>* colonnes 1-2; figure 1 *<br><br>--- | 1,2 |
| A | JOURNAL OF PHYSICS: E: SCIENTIFIC INSTRUMENTS, vol. 6, no. 1, janvier 1973 OXFORD (GB) R. EDWIN: "Light scattering as a technique for measuring the roughness of optical surfaces" pages 55-58<br><br>* pages 55-56; figure 1 *<br><br>--- | 1 |
| A | PROGRESS IN ORGANIC COATINGS, vol. 1, 1972 LAUSANNE (CH) U. ZORLL: "New aspects of gloss of peint film and its measurement" pages 113-155<br><br>* pages 116-118, 124-128 *<br><br>--- | 1 |
| A | JAPANESE JOURNAL OF APPLIED PHYSICS, vol. 17, no. 5, mai 1978 KYOTO (JP) T. SUZUKI: "A method for measuring high reflectivity" pages 929-935<br><br>* pages 930-931 *<br><br>--- | 1 |
| A | US - A - 3 675 016 (W. BLAISDELL)<br><br>* colonne 2; figure 1 * | 4,5 ./ |

**DOCUMENTS CONSIDERES COMME PERTINENTS**

**CLASSEMENT DE LA DEMANDE (Int. Cl. ³)**

G 01 N 21/57
G 01 B 11/30

**DOMAINES TECHNIQUES RECHERCHES (Int. Cl. ³)**

G 01 B 11/30
G 01 N 21/57
G 01 N 21/55

**CATEGORIE DES DOCUMENTS CITES**

X· particulièrement pertinent à lui seul
Y· particulièrement pertinent en combinaison avec un autre document de la même catégorie
A: arrière-plan technologique·
O: divulgation non-écrite
P: document intercalaire
T· théorie ou principe à la base de l'invention
E· document de brevet antérieur, mais publié à la date de dépôt ou après cette date
D· cité dans la demande
L· cité pour d'autres raisons

&. membre de la même famille, document correspondant

Le présent rapport de recherche a été établi pour toutes les revendications

| Lieu de la recherche | Date d'achevement de la recherche | Examinateur |
|---|---|---|
| La Haye | 12-03-1982 | BOEHM |

OEB Form 1503.1  06.78

Office européen
des brevets

**RAPPORT DE RECHERCHE EUROPEENNE**

| **DOCUMENTS CONSIDERES COMME PERTINENTS** | | | CLASSEMENT DE LA DEMANDE (Int. Cl.³) |
|---|---|---|---|
| Catégorie | Citation du document avec indication, en cas de besoin, des parties pertinentes | Revendication concernée | |
| A | US - A - 3 971 956 (E. JAKEMAN et al.) <br><br> * colonnes 1-2; figures 1,7 * <br><br> --- | 3 | |
| A | APPLIED OPTICS, vol. 8, no. 9, septembre 1969 <br> NEW YORK (US) <br> J. CHRISTIE: "An instrument for the geometric attributes of metallic appearance" <br> pages 1777-1785 <br><br> * pages 1777-1780 * <br><br> --------- | 1 | **DOMAINES TECHNIQUES RECHERCHES (Int. Cl.³)** |